# EUROPEAN PATENT APPLICATION

(11) **EP 4 462 454 A1**
(43) Date of publication of application: **13.11.2024**
(21) Application number: 23172924.5
(22) Date of filing: 11.05.2023
(51) Int. Cl.: H01F 7/16, H02K 33/16, G06F 3/01

(54) **ACTUATOR**

(71) Applicant: Grewus GmbH, 22335 Hamburg (DE)
(72) Inventor: BOJSKOV ROTHMANN, Morten, 6440 Augustenborg (DK); SANTELLA, Daniel, 23866 Nahe (DE); SANDOMEER, Ralf, 22159 Hamburg (DE)
(74) Representative: Hoffmann Eitle

(57) **Abstract**

An actuator comprising: a housing having a rectangular shape, a first spring having a rectangular outer shape, a cuboid magnet, and a coil provided around the magnet, wherein the housing contains the first spring, the magnet and the coil.

## Description

### Technical Field

The present invention relates to an actuator, in particular to an actuator comprising a housing having a rectangular shape. The present invention can for example find an application in the context of operation surfaces, as e.g., common in many fields including mobile devices, smartphones, automotive dashboards, touch screens, consumer products, etc.

### Technical Background

Actuators, among them also voice-coil actuators for haptic feedback (also called "exciters"), are included in many, if not all, modern products to be used by a user. Specific examples are touch displays and smart surfaces. Apart smartphones whose operation almost exclusively works by means of such a touch display, touch displays are also present in many other consumer products such as washing machines, cars, refrigerators, etc. Moreover, in many cases, these displays are not only able to receive input from the user but also able to output active haptic feedback back to the user, for example to confirm that an input has been received or a certain action has been performed. These types of surfaces are called "active haptic surfaces" as they provide an active haptic signal to the user, in particular in response to the user providing an input to the application, e.g., by touching the surface.

One relevant aspect of actuators in such applications is providing them within the applications. That is, the actuator does not only need to function within the application, providing it within the application should also be easy, and reliable, that is, not require complex support constructions. This is however the case with conventional actuators, in particular those that have a round shape, i.e., are tubular or circular. While such actuators may be relatively simple in their construction and manufacture, in particular when using a coil and a magnet to generate the haptic signal/feedback, the generally round shape oftentimes requires such complex support constructions. This not only makes the process as a whole more complex, but it also increases costs and requires more space in the application for the actuator.

Therefore, there is a need for an actuator that can provided within an application in an easy manner, thereby not only simplifying mounting the actuator, but also enabling a more efficient use of the available space.

### Summary

The above problems are solved by the subject-matter of the independent claim. Further preferred embodiments are given by the subject-matter of the dependent claims.

According to an embodiment of the present invention, there is provided an actuator comprising: a housing having a rectangular shape, a first spring having a rectangular outer shape, a cuboid magnet, and a coil provided around the magnet, wherein the housing contains the first spring, the magnet and the coil.

### Brief description of the drawings

Embodiments of the present invention, which are presented for better understanding the inventive concepts, but which are not to be seen as limiting the invention, will now be described with reference to the figures in which:
- Figure 1: shows schematic exploded views of an actuator according to an embodiment of the present invention;
- Figure 2: shows a further schematic exploded view of an actuator according to an embodiment of the present invention; and
- Figure 3: shows a schematic top exploded view of an actuator according to an embodiment of the present invention.

### Detailed Description

In the following, embodiments according to the present invention will be described, also with reference to the figures.

In an embodiment of the present invention, there is provided an actuator comprising a housing having a rectangular shape, a first spring having a rectangular outer shape, a cuboid magnet, and a coil provided around the magnet, wherein the housing contains the first spring, the magnet and the coil.

Herein, a rectangular shape is to be understood as a substantially rectangular shape, that is, to also cover a rectangular shaped with rounded or flattened corners. In other words, the rectangular shape is preferably a rectangular shape with rounded or flattened corners. In fact, for various reasons, not having a housing with sharp edges may be preferable.

This applies not only to the shape of the housing of the actuator, but also to the outer shape of the first spring and any other element described herein as being rectangular.

The rectangular shape of the housing enables that the actuator can be mounted more easily on a flat surface, for example a printed circuit, of an application and can also be used in more diverse ways.

Moreover, when a housing with a rectangular housing (or simply: a rectangular housing, but also even simpler: a rectangular actuator) is employed, complex mounting structures, which are necessary with conventional actuators, can be replaced by gluing or by clips. This not only makes the overall application simpler in construction and manufacture, but it also results in lower costs and saves space.

The saving in space is twofold: First, the space needed to mount the actuator within the application can be reduced as the additional mounting structures can avoided and second the unused space can be reduced as oftentimes a rectangular shape can be placed more fittingly within an application.

As a consequence, the resulting larger contact area of the actuator with the surface of the application also increases efficiency of the actuator and the maximum possible haptic feedback. One reason for this can be seen in the larger contact area allowing more of the force provided by the actuator to be transferred via the contact area to the application (the surface of the application) and accordingly the actuator can provide a higher maximum haptic feedback and/or the same maximum haptic feedback with less power required when compared to a conventional actuator.

In addition, the first spring having a rectangular outer shape provides the further advantage that the various elements of the actuator, for example the first spring and the housing, are structurally compatible, which makes for an easier construction and manufacture, but also increases the efficiency of the actuator.

This is in particular the case if in addition to the elements having the same (or substantially the same) shape, their sizing corresponds to each other, i.e., they are fitting to each other.

Herein, magnet is to be understood as synonymously as "permanent magnet". Moreover, it is noted that also the magnet being of cuboid shape contributes to the above discussed advantage of a more efficient actuator as it contributes to the efficient use of the available space within the actuator given the rectangular shape of its housing. This can be understood when considering that if the rectangular housing of the actuator makes more efficient use of the available space within in application, that means that compared to a conventional round actuator using a round magnet, the inner part of the actuator is bigger, thus allowing for an overall bigger magnet if one replaces the round magnet with a cubic one. As a consequence of the overall bigger magnet, the mass moved through the change in current in the coil is bigger, hence the force applied to the spring is bigger. This results in a higher maximum force and/or a more efficient provision of the same force similar as explained above.

Further, the coil may comprise a wire and/or a core. Given the cuboid shape of the magnet as well as the rectangular shape of the housing, the wire and/or the core may have a corresponding rectangular/cuboid shape as well. Thereby, these elements contribute to the increased efficiency of the actuator as well. The coil provided around the magnet may also be wound around the magnet. Further, the coil may be a coil body or a coil former.

In the following, the function of the actuator, in particular how a haptic signal can be provided by the actuator, will be explained.

The underlying physical concept is that of the Lorentz force, specifically the aspect that elements with charge, such as a magnet, experience a force in an electric field.

By energizing the coil, for example a wire comprised in the coil, an electric field is generated. This electric field exerts a force on the magnet. As a result, the magnet moves and sets the spring in vibration as the two come into contact. Please note that, that the magnet and the spring may or may not be in contact already before the coil is energized. The vibration of the spring may constitute the haptic signal and/or haptic feedback provided by the actuator. This haptic signal and/or haptic feedback may be forwarded or redirected to an application surface at which the actuator is provide or to which the actuator is fixated.

In this context, it is noted that in particular in view of this conventional approach of providing a magnet and wire provided around it as the coil, conventional actuators have circular shapes: Having a tubular magnet makes it easy to provide a wire around the magnet and the resulting radial symmetry results in a more uniform electric field, allowing for a simple understanding of the mechanisms at work. Hence, controlling the actuator is simpler. Following this layout, it is almost natural, but at the very least a very convenient solution to provide the housing with a similar shape as - starting from the inner elements of the actuator - this results in smaller actuator.

This approach, however, considers only the actuator as a single element and does not take into account how the actuator is used in the application in which it is provided. Different from that, the present invention takes into account not only how to design the actuator as such but also gives appropriate weight to the fact that the application and its constraints/properties should be considered when designing the actuator.

To this end, the present invention approaches the design of the actuator not from "internal conveniences" such as a tubular shape being simpler in various aspects, but rather starts from "external requirements", namely that mounting the actuator in a simple and space saving manner and providing an efficient transfer of the haptic signal from the actuator to the application is important for the actuator installed in the application.

In other words, the present invention is based on putting the considerations regarding the actuator itself second behind the considerations regarding the actuator within its application.

Further, the magnet of the actuator may have a cubic shape. In other words, the magnet may have a shape fitting into the rectangular shape of the housing. This shape may further increase the efficiency of the magnetic field.

Further, the actuator may comprise a first adapter provided in contact with the first spring and a first pole piece (pole plate) provided in contact with the first adapter and the magnet. The first adapter may preferably have a rectangular shape. The first pole piece may have a rectangular shape.

This adapter between spring and magnet increases the load capacity, especially that of the spring, and thus reduces mechanical (over)loads and plastic deformations and thus the longevity of the actuator.

Further, the rectangular shape of both elements also contributes to a more efficient actuator in line with the above discussion; in fact, having the entire actuator and all of its components to be of rectangular or substantially rectangular shape enhances the increase efficiency achieved by the rectangular housing.

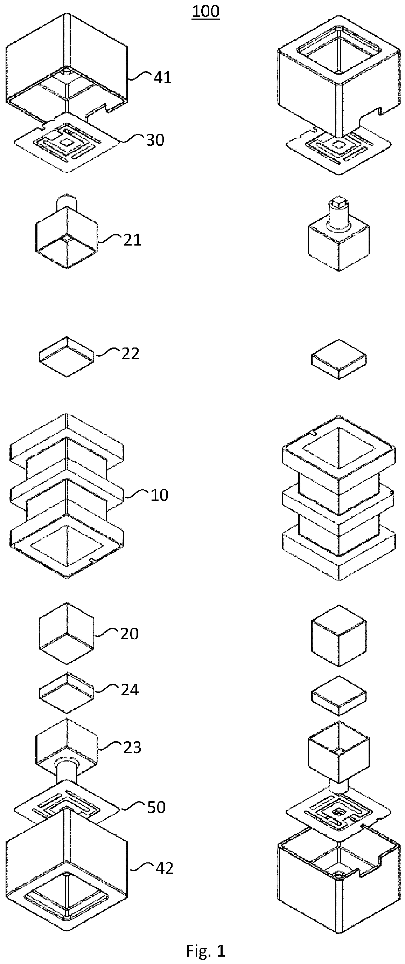

Figure 1 shows schematic exploded views of an actuator according to an embodiment of the present invention. Specifically, Figure 1 shows two schematic exploded views of the same actuator but showing a different perspective. Accordingly, a detailed description of the left part of Figure 1 applies equally to the right part and hence is omitted. In detail, Figure 1 shows an actuator 100 comprising a housing 40 having a rectangular shape, a first spring 30 having a rectangular outer shape, and a coil 10 provided around a cuboid magnet 20 (not shown in Figure 1), wherein the housing 40 contains the first spring 30, the magnet 20 and the coil 10. As can be seen here, the coil 10 may be a coil body and hence any wire provided inside is not shown in Figure 1.

In addition to the above discussed embodiment, herein the housing 40 comprises a first housing part 41 having a rectangular shape and a second housing part 42 having a rectangular shape, and the actuator 100 further comprises a second spring 50 arranged in the second housing part 42, the first spring 30 being arranged in the first housing part 41, a second adapter 23 provided in contact with the second spring 50, and a second pole piece 24 provided in contact with the second adapter 23 and the magnet 20.

Further, in line with the above discussing, a first adapter 21 is provided in contact with the first spring 30 and a first pole piece 22 is provided in contact with the first adapter 21 and the magnet 20. The first adapter 21 may preferably have a rectangular shape. The first pole piece 22 may have a rectangular shape.

In this case, as also indicated in Figure 1, the magnet 20 may be connected to the first pole piece 22 and the second pole piece 24 and may moreover also be connected to the first adapter 21 and the second adapter 22. In addition, the first spring 30 and the second spring 50 may be connected to first adapter 21 and the second adapter 22, respectively. This assembly may be connected to the coil former 10. Further, the first housing part 41 and the second housing part 42 may be firmly connected to the coil former 10. The first housing part 41 and the second housing part 42 may serve as additional fixation for the first spring 30 and the second spring 50 and may serve to protect the coil 10. The connections may be firm connections.

In this context, it is noted that the shape of the housing previously discussed as "rectangular" may be seen as "cuboid" as well.

As can be seen from Figure 1, in this embodiment the actuator described above is mirrored and contains each element but the magnet twice on each side of the magnet. This configuration of two springs (and two pole pieces, two adapters as well as two housing parts) can ensure axial guidance of the moving mass inside, i.e., the magnet. In addition, the prevailing forces are thereby distributed over two springs. In other words, this allows for a more balanced and controlled haptic feedback.

The second pole piece may have a rectangular shape. Further, the second adapter may have a rectangular shape as well. This rectangular shape of each of these two elements also contributes to a more efficient actuator, in line with the above discussion.

In the actuator, the first housing part may comprise a first bottom surface, four first side surfaces and a first top surface, wherein the first spring may be in contact with the first bottom surface, the second housing part may comprise a second bottom surface, four second side surfaces and a second top surface, wherein the second spring is in contact with the second bottom surface, and wherein the first top surface is in contact with the second top surface.

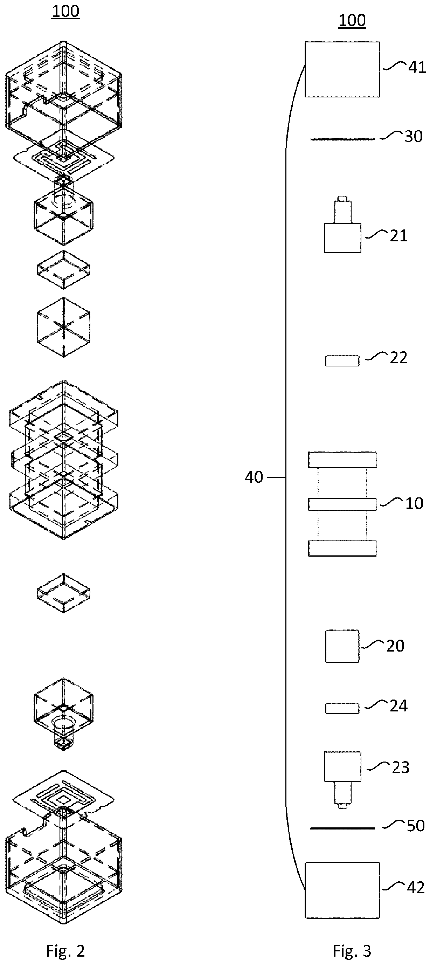

Figure 2 shows a further schematic exploded view of an actuator according to an embodiment of the present invention. Figure 2 shows substantially the same actuator as shown in Figure 1, namely an actuator 100 comprising a housing 40 having a rectangular shape, a first spring 30 having a rectangular outer shape, and a coil 10 provided around a cuboid magnet 20, wherein the housing 40 comprises the first spring 30, the magnet 20 and the coil 10. Figure 2 shows - in addition to Figure 1 - by the dashed lines further details of the structure of the various elements and thus complements the illustration of the actuator 100 of Figure 1.

Figure 3 shows a schematic top exploded view of an actuator according to an embodiment of the present invention. Figure 3 shows substantially the same actuator as shown in Figures 1 and 2, namely an actuator 100 comprising a housing 40 having a rectangular shape, a first spring 30 having a rectangular outer shape, and a coil 10 provided around a cuboid magnet 20 (not shown in Figure 3), wherein the housing 40 comprises the first spring 30, the magnet 20 and the coil 10. Figure 3 provides - in addition to Figures 2 and 3 - by showing a top exploded view provides further details of the actuator 100 and the individual components of the same.

Taken together, from Figures 1 to 3 the above-described concept of the various elements having shapes that are (substantially) rectangular resp. cuboid and are such that they fit to each other can readily be understood.

In addition, the actuator may be configured to provide acoustic and/or haptic signals through at least one of the first spring and the second spring.

Further, the actuator may comprise a printed circuit board attached to the housing. This printed circuit board may serve the purpose of forwarding to the coil provided by an external

Although detailed embodiments have been described, these only serve to provide a better understanding of the invention defined by the independent claims and are not to be seen as limiting.

## Claims

1. An actuator comprising:
a housing having a rectangular shape,
a first spring having a rectangular outer shape,
a cuboid magnet, and
a coil provide around the magnet,
wherein the housing contains the first spring, the magnet and the coil.

2. The actuator according to claim 1, wherein
the magnet has a cubic shape.

3. The actuator according to claim 1 or 2, further comprising:
a first adapter provided in contact with the first spring, the first adapter preferably having a rectangular shape, and
a first pole piece provided in contact with the first adapter and the magnet.

4. The actuator according to claim 3, wherein the first pole piece has a rectangular shape.

5. The actuator according to any one of claims 1 to 4,
wherein
the housing comprises a first housing part having a rectangular shape and a second housing part having a rectangular shape, and
the actuator further comprises
a second spring arranged in the second housing part, and the first spring is arranged in the first housing part,
a second adapter provided in contact with the second spring, and
a second pole piece provided in contact with the second adapter and the magnet.

6. The actuator according to claim 5, wherein the second pole piece has a rectangular shape.

7. The actuator according to claim 5 or 6, wherein
the first housing part comprises a first bottom surface, four first side surfaces and a first top surface,
the first spring is in contact with the first bottom surface,
the second housing part comprises a second bottom surface, four second side surfaces and a second top surface,
the second spring is in contact with the second bottom surface, and
the first top surface is in contact with the second top surface.

8. The actuator according to any one of claims 1 to 7,
wherein
the actuator is configured to provide acoustic and/or haptic signals through at least one of the first spring and the second spring.

9. The actuator according to any one of claims 1 to 8, further comprising a printed circuit board attached to the housing.

10. The actuator according to any one of claims 1 to 9,
wherein
the coil comprises a wire.

11. The actuator according to claim 10,
the coil further comprising a core.

## Amended claims

### Amended claims in accordance with Rule 137(2) EPC.

1. An actuator (100) comprising:
a housing (40) having a rectangular shape,
a first spring (30) having a rectangular outer shape,
a cuboid magnet (20),
a coil (10) provided around the magnet (20),
a first adapter (21) provided in contact with the first spring (30), and
a first pole piece (22) provided in contact with the first adapter (21) and the magnet (20),
wherein the housing (40) contains the first spring (30), the magnet (20) and the coil (10).

2. The actuator (100) according to claim 1, wherein
the magnet (20) has a cubic shape.

3. The actuator (100) according to claim 1 or 2, wherein the first adapter (21) has a rectangular shape.

4. The actuator (100) according to any one of claims 1 to 3, wherein the first pole piece (22) has a rectangular shape.

5. The actuator (100) according to any one of claims 1 to 4, wherein
the housing (40) comprises a first housing part (41) having a rectangular shape and a second housing part (42) having a rectangular shape, and
the actuator (100) further comprises
a second spring (50) arranged in the second housing part (42), and the first spring (30) is arranged in the first housing part (41),
a second adapter (23) provided in contact with the second spring (50), and
a second pole piece (24) provided in contact with the second adapter (23) and the magnet (20).

6. The actuator (100) according to claim 5, wherein the second pole piece has a rectangular shape.

7. The actuator (100) according to claim 5 or 6, wherein
the first housing part (41) comprises a first bottom surface, four first side surfaces and a first top surface,
the first spring (30) is in contact with the first bottom surface,
the second housing part (42) comprises a second bottom surface, four second side surfaces and a second top surface,
the second spring is in contact with the second bottom surface, and
the first top surface is in contact with the second top surface.

8. The actuator (100) according to any one of claims 1 to 7, wherein
the actuator (100) is configured to provide acoustic and/or haptic signals through at least one of the first spring (30) and the second spring (50).

9. The actuator (100) according to any one of claims 1 to 8, further comprising a printed circuit board attached to the housing (40).

10. The actuator (100) according to any one of claims 1 to 9, wherein
the coil (10) comprises a wire.

11. The actuator (100) according to claim 10,
the coil (10) further comprising a core.
